# EUROPEAN PATENT APPLICATION

(11) **EP 4 806 775 A1**
(43) Date of publication of application: **16.09.2026**
(21) Application number: 24888313.4
(22) Date of filing: 02.08.2024
(51) Int. Cl.: B62J 45/41, B62J 6/05, B62J 6/022, B62J 17/04, B62J 29/00

(54) **CAMERA ARRANGEMENT STRUCTURE FOR SADDLE-RIDDEN VEHICLE**

(30) Priority: 06.11.2023 JP 2023189156
(71) Applicant: Astemo, Ltd., Chiyoda-ku, Tokyo 1000004 (JP)
(72) Inventor: ATSUTA, Daiki, Hitachinaka-shi Ibaraki 312-8503 (JP); AKIMOTO, Yutaka, Hitachinaka-shi Ibaraki 312-8503 (JP); TADA, Naoya, Hitachinaka-shi Ibaraki 312-8503 (JP)
(74) Representative: v. Bezold & Partner Patentanwälte - PartG mbB
(86) International application number: PCT/JP2024/027677
(87) International publication number: WO 2025/100011

(57) **Abstract**

In a camera arrangement structure for a saddle-ridden vehicle (1, 1'), the position of a first imaging lens (104R) of a first camera (100R) in a vehicle width direction and the position thereof in an upper-lower direction are defined to prevent a conical outer profile (106R) of a first angle of view (AR) corresponding to the position of the first imaging lens (104R) in a forward-backward direction from interfering with an outer portion (PR, PR') positioned on an outer side in a vehicle body (10, 30) of the saddle-ridden vehicle (1, 1') in front of the first imaging lens (104R), and the position of a second imaging lens (104L) of a second camera (100L) in the vehicle width direction and the position thereof in the upper-lower direction are defined to prevent a conical outer profile (106L) of a second angle of view AL corresponding to the position of the second imaging lens (104L) in the forward-backward direction from interfering with an outer portion (PL, PL') positioned on an outer side in the vehicle body (10, 30) of the saddle-ridden vehicle (1, 1') in front of the second imaging lens (104L).

## Description

### TECHNICAL FIELD

The present invention relates to a camera arrangement structure for a saddle-ridden vehicle.

### BACKGROUND ART

In recent years, researches and developments on advanced driver-assistance systems (ADAS) having a function to assist a driving operation of a driver of a vehicle are conducted from a standpoint of improving safety and the like of the vehicle and the traffic environment where the vehicle travels. Since information on the surrounding environment of a vehicle is required in these advanced driver-assistance systems, a configuration in which the information on the surrounding environment of the vehicle is detected by a camera or the like and the driving operation of the driver of the vehicle is assisted using the detected information has been proposed.

Under such circumstances, Patent Document 1 relates to an optical sensor arrangement structure 2 of a saddle-ridden vehicle 1 and discloses a configuration that includes an optical sensor 30 being a camera and an air guide member 4 that is arranged in front of a head pipe and covers a front part of the vehicle body and on which an inlet 40 guiding backward an airflow during traveling is formed, and where the optical sensor 30 is arranged to overlap the inlet 40 in a view from the front.

### PRIOR ART DOCUMENT

### PATENT DOCUMENT

Patent Document 1: Patent Publication No. 6628411

### SUMMARY OF THE INVENTION

### PROBLEM TO BE SOLVED BY THE INVENTION

According to the study by the inventors of the present invention, the optical sensor arrangement structure for a saddle-ridden vehicle in Patent Document 1 aims improvement of the exterior appearance while ensuring the detection region of the optical sensor. However, to appropriately arrange the camera on the inlet, it is considered that a special configuration specific to the vehicle, such as the shape of the inlet including the air guide member and the shape of a cowl being a part of the vehicle body located around the inlet, which are formed along the angle of view (the angle of viewing field) of the camera is required. That is, it is considered that there is room in this configuration for improvement related to imaging of the surrounding environment in an appropriate imaging range not obstructed by the vehicle body in a manner where the mountability of a camera on a saddle-ridden vehicle is enhanced.

The present invention has been made through the above studies and it is an object of the present invention to provide a camera arrangement structure for a saddle-ridden vehicle that can enhance the mountability of a camera on a saddle-ridden vehicle and that can image the surrounding environment in an appropriate imaging range that is not obstructed by a vehicle body.

### MEANS FOR SOLVING THE PROBLEM

In order to achieve the above object, one aspect of the present invention provides a camera arrangement structure for a saddle-ridden vehicle that includes a stereo camera imaging a surrounding environment, and for which a forward-backward direction, a vehicle width direction, and an upper-lower direction are defined, wherein the stereo camera includes a first camera, and a second camera that is a separate member from the first camera and that is opposed to the first camera in the vehicle width direction, the first camera has a first angle of view and a first imaging lens, and a position of the first imaging lens in the vehicle width direction and a position thereof in the upper-lower direction are defined to prevent an outer edge of the first angle of view corresponding to a position of the first imaging lens in the forward-backward direction from interfering with a portion positioned on an outer side in a vehicle body of the saddle-ridden vehicle in a forward direction of the first imaging lens in the forward-backward direction, and the second camera has a second angle of view and a second imaging lens, and a position of the second imaging lens in the vehicle width direction and a position thereof in the upper-lower direction are defined to prevent an outer edge of the second angle of view corresponding to a position of the second imaging lens in the forward-backward direction from interfering with a portion positioned on an outer side in the vehicle body of the saddle-ridden vehicle in a forward direction of the second imaging lens in the forward-backward direction.

### EFFECT OF THE INVENTION

According to the camera arrangement structure for a saddle-ridden vehicle of one aspect of the present invention described above, a position of the first imaging lens of the first camera in the vehicle width direction and a position thereof in the upper-lower direction are defined to prevent an outer edge of the first angle of view corresponding to a position of the first imaging lens in the forward-backward direction from interfering with a portion positioned on an outer side in a vehicle body of the saddle-ridden vehicle in the forward direction of the first imaging lens, and a position of the second imaging lens of the second camera in the vehicle width direction and a position thereof in the upper-lower direction are defined to prevent an outer edge of the second angle of view corresponding to a position of the second imaging lens in the forward-backward direction from interfering with a portion positioned on an outer side in the vehicle body of the saddle-ridden vehicle in the forward direction of the second imaging lens. Therefore, the mountability of cameras on a saddle-ridden vehicle can be enhanced and the surrounding environment can be imaged in an appropriate imaging range not obstructed by the vehicle body.

### BRIEF DESCRIPTION OF THE DRAWINGS

[FIG. 1] FIG. 1 is a diagram for conceptually explaining a camera arrangement structure of an embodiment of the present invention and is a front view illustrating a front face of a saddle-ridden vehicle to which this camera arrangement structure is applied.
[FIG. 2] FIG. 2 is a diagram for conceptually explaining the camera arrangement structure of the present embodiment and is a partial plan view partially illustrating a top face of the saddle-ridden vehicle to which this camera arrangement structure is applied.
[FIG. 3] FIG. 3 is a schematic diagram illustrating one camera of stereo cameras applied to the camera arrangement structure of the present embodiment and for convenience's sake, reference sign for the right camera of a pair of the right and left cameras is illustrated outside parentheses and reference sign for the left camera is illustrated in the parentheses.
[FIG. 4] FIG. 4 is a diagram for conceptually explaining the camera arrangement structure of the present embodiment and is a front view illustrating a front face of a saddle-ridden vehicle to which the camera arrangement structure is applied.
[FIG. 5] FIG. 5 is a partial front view partially illustrating a front face of a saddle-ridden vehicle to which the camera arrangement structure of the present embodiment is applied.
[FIG. 6] FIG. 6 is a partial side view partially illustrating a right side face of the saddle-ridden vehicle to which the camera arrangement structure of the present embodiment is applied.
[FIG. 7] FIG. 7 is a partial front view partially illustrating a front face of a saddle-ridden vehicle of another example to which the camera arrangement structure of the present embodiment is applied.

### EMBODIMENT FOR CARRYING OUT THE INVENTION

A camera arrangement structure for a saddle-ridden vehicle according to an embodiment of the present invention is explained below in detail with reference to the drawings as appropriate. In the drawings, an x-axis, a y-axis, and a z-axis form a triaxial orthogonal coordinate system. Assuming the direction of the x-axis as the longitudinal direction of a saddle-ridden vehicle, the forward direction thereof is represented by the positive direction of the x-axis. Assuming the direction of the y-axis as the vehicle width direction of the saddle-ridden vehicle, the left direction thereof is represented by the positive direction of the y-axis. Assuming the direction of the z-axis as the upper-lower direction of the saddle-ridden vehicle, the upper direction thereof is represented by the positive direction of the z-axis. The saddle-ridden vehicle in the drawings is assumed to be in an upright state where there is no steering operation and where only the self-weight is applied.

### [Configuration related to saddle-ridden vehicle]

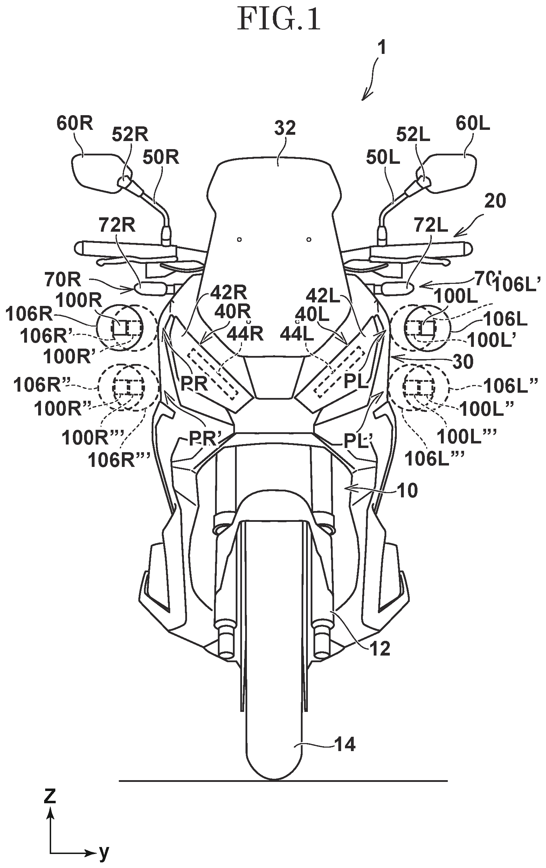

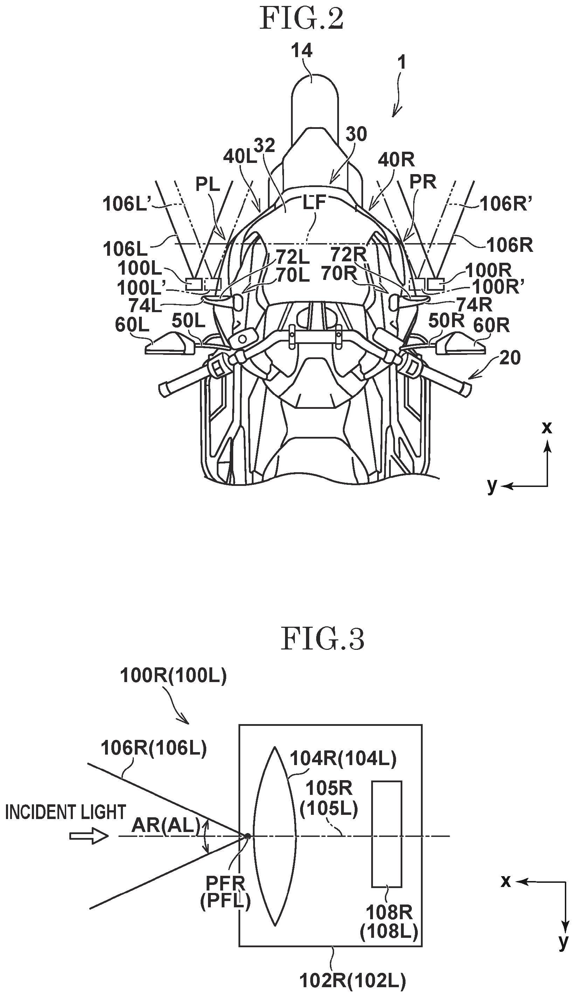

A configuration of a saddle-ridden vehicle to which the camera arrangement structure of the present embodiment is applied is explained in detailed first with reference to FIGS. 1 and 2.

FIG. 1 is a diagram for conceptually explaining the camera arrangement structure of the present embodiment and is a front view illustrating the front face of the saddle-ridden vehicle to which this camera arrangement structure is applied. FIG. 2 is a diagram for conceptually explaining the camera arrangement structure of the present embodiment and is a partial plan view partially illustrating the top face of the saddle-ridden vehicle to which this camera arrangement structure is applied.

As representatively illustrated as a two-wheeled automobile in FIGS. 1 and 2, a saddle-ridden vehicle 1 includes a steering and front suspension mechanism 10 that has a telescopic front fork 12 and that suspends a front wheel 14 as a driven wheel so as to be capable of steering the front wheel 14, a handle 20 that is connected to the telescopic front fork 12 and that is a member operated by a driver to steer the front wheel 14, a front cowl 30 being a part of the vehicle body, a windscreen 32 and headlight units 40R and 40L arranged to face the front cowl 30 in the upper-lower direction, mirror stays 50R and 50L fixed to the handle 20, mirrors 60R and 60L supported via attachment parts 52R and 52L corresponding to the mirror stays 50R and 50L, turn signal units 70R and 70L arranged above the headlight units 40R and 40L so as to be protruded from the front cowl 30 outward in the vehicle width direction, and cameras 100R and 100L being optical units that image and acquire surrounding environment information of the saddle-ridden vehicle 1 as images of surrounding environment objects. The right headlight unit 40R out of the headlight units 40R and 40L has a cover 42R arranged in a forward part, and a light 44R being a light-emitting source arranged behind the cover 42R in an enclosure (not denoted by reference sign). Meanwhile, the left headlight unit 40L out of the headlight units 40R and 40L has a cover 42L and a light 44L in an enclosure (not denoted by reference sign) to be bilaterally symmetrical to the right headlight unit 40R. The right turn signal unit 70R out of the turn signal units 70R and 70L has a cover 72R arranged in a forward part, and a light 76R being a light-emitting source arranged behind the cover 72R in an enclosure 74R. Meanwhile, the left turn signal unit 70L out of the turn signal units 70R and 70L has an enclosure 74L, a cover 72L, and a light 76L to be bilaterally symmetrical to the right turn signal unit 70R. While an on-road-based adventure-type two-wheeled automobile having characters of an off-road motorcycle and a sport tourer is illustrated as an example in FIGS. 1 and 2, a scooter including a big scooter, and various types such as a classical type including a modern classical type, a naked type, a street type, a sport type, and a cruiser type may be also adopted as a two-wheeled automobile as well as the adventure-type two-wheeled automobile. As the saddle-ridden vehicle 1, a small and lightweight three-wheeled or four-wheeled automobile such as a buggy may be adopted as well as the two-wheeled automobile. An internal combustion engine, an electrical motor, or a combination of an internal combustion engine and an electrical motor may be adopted as a drive source (not illustrated).

### [Configuration related to cameras]

Configurations of the cameras 100R and 100L being stereo cameras as optical units applied to the camera arrangement structure of the present embodiment are explained next in detail with reference also to FIG. 3.

FIG. 3 is a schematic diagram illustrating one camera of the stereo cameras applied to the camera arrangement structure of the present embodiment. For convenience's sake, reference sign for the right camera of a pair of the right and left cameras is illustrated outside parentheses and reference sign for the left camera is illustrated in the parentheses.

As illustrated in FIG. 3, the cameras 100R and 100L function as the stereo cameras in a pair of the right and left cameras. Since the configurations of these cameras are substantially the same, the camera 100R functioning as a right camera is mainly explained for sake of simplicity. The camera 100R has an enclosure 102R made of a metal such as an aluminum alloy or made of a synthetic resin, an optical imaging lens 104R that has an optical axis 105R and that is subjected to natural light or artificial light and receives reflected light from surrounding environment objects located around the saddle-ridden vehicle 1 as incident light to image the surrounding environment objects, and an imaging element 108R that generates an electric signal corresponding to an image of the surrounding environment objects on which the imaging lens 104R is focused to output the electric signal to an electronic control device (not illustrated). The angle of view (hereinafter, referred to also as "view angle") AR of the camera 100R may indicate not only an angle of optical view of the imaging lens 104R but also an angle of view in image processing, which is obtained by image processing after passing through the imaging lens 104R and the imaging element 108R. As one example of the view angle AR, an outer edge 106R and the like (hereinafter, referred to as "view angle outer edge") that are circular on a longitudinal section in a view from the front are illustrated in FIG. 1, and the view angle outer edge 106R and the like extending forward while being inclined in a view from the top are illustrated in FIGS. 2 and 3. However, the view angle outer edge 106R and the like may be, for example, rectangular on the longitudinal section in the view from the front in FIG. 1. The angle about each of a total of three axes including the x-axis, the y-axis, and the z-axis in the camera 100R can be set to a prescribed angle. However, for convenience's sake, the angles about these three axes are assumed to be zero, that is, it is assumed that the camera 100R has an attached attitude unrotated about each of the x-axis, the y-axis, and the z-axis and that the optical axis 105R of the imaging lens 104R is parallel to the x-axis and orthogonal to the y-axis and the z-axis.

The imaging lens 104R is housed in the enclosure 102R and has the view angle AR around the optical axis 105R. Since an aperture stop (not illustrated) is typically arranged to the imaging lens 104R, the vertex of the view angle AR matches a front principal point PFR. In FIG. 3, an example in which the imaging lens 104R is housed inside the enclosure 102R is illustrated. In this case, at least a part of the front wall part of the enclosure 102R is translucent. The imaging lens 104R may be arranged on the front wall part itself of the enclosure 102R. The imaging lens 104R may be a single optical lens or a combination of a plurality of optical lenses.

The imaging element 108R is housed in the enclosure 102R and is typically an image sensor such as a CMOS (Complementary Metal Oxide Semiconductor) sensor or a CCD (Charge Coupled Device) sensor. An arrangement surface for a light-receiving element such as a photodiode of the imaging element 108R typically forms a single flat plane orthogonal to the optical axis 105R of the imaging lens 104R. The imaging element 108R converts image data obtained by imaging surrounding environment objects via the imaging lens 104R into an electric signal and inputs the converted electric signal indicating the image data to the electronic control device (not illustrated). The electric signal indicating the image data is transmitted to the electronic control device through a wired or wireless communication. Since no line is required in the case of a wireless communication, the mountability of the cameras 100R and 100L and the electronic control device can be enhanced in a manner of not exerting undesired influences on the exterior appearance of the saddle-ridden vehicle 1.

In the other camera 100L on the left side, configurations of an enclosure 102L, an imaging lens 104L, an optical axis 105L, a view angle AL, a front principal point PFL, a view angle outer edge 106L, and an imaging element 108L are the same as those of one camera 100R on the right side. The electronic control device calculates, for example, a tilt angle (roll angle) about a roll axis extending to correspond to the x-axis in the saddle-ridden vehicle 1, or the like, on the basis of the electric signal input from each of the imaging elements 108R and 108L of the cameras 100R and 100L, causes the tilt angle or the like to correspond to the image taken by each of the cameras 100R and 100L, and performs correction processing of rotating the taken image using the tilt angle or the like.

### [Camera arrangement structure]

Regarding the camera arrangement structure of the present embodiment, principle arrangement conditions thereof are explained next in detail using the right camera 100R as an example with reference to FIGS. 1 to 3.

In a case where the right camera 100R applied to the saddle-ridden vehicle 1 mainly images forward surrounding environment objects of the saddle-ridden vehicle 1, the camera 100R is typically arranged in front of a driver seated on the saddle-ridden vehicle 1. In this case, since the front cowl 30 being a part of the vehicle body is placed on a forward part of the saddle-ridden vehicle 1, the arrangement position of the camera 100R needs to be set to prevent the imaging range of the camera 100R from being obstructed by the front cowl 30. For this purpose, the arrangement position of the camera 100R that also avoids a situation where the view angle outer edge 106R of the view angle AR of the camera 100R interferes with the front cowl 30 and a part of the imaging range in the imaging lens 104R or in image processing by the electronic control device through the imaging lens 104R and the imaging element 108R is obstructed in a state where the shape of the front cowl 300 is maintained to be an existing one so as not to decrease the mounting flexibility of the camera 100R needs to be set. In a case where a part of the front cowl 30 or the whole front cowl 30 is omitted, the steering and front suspension mechanism 10, a fender that covers the front wheel 14, glove covers in front of the handle 20, and a bracket coupled to a frame member are examples of other structural objects that may obstruct a part of the imaging range in front of the camera 100R. Therefore, these objects are also regarded as a part of the vehicle body similarly to the front cowl 30.

Specifically, the front cowl 30 typically has a basic shape in the vehicle width direction where a rear portion is wider than a front portion and a basic shape in the upper-lower direction where an intermediate portion is larger than an upper portion and a lower portion, and the front cowl 30 has a shape finely changing to be protruded outward or sagged inward in the vehicle width direction as the position in the upper-lower direction changes on a longitudinal section orthogonal to the optical axis 105R in front of the imaging lens 104R (a longitudinal section taken on a plane parallel to a y-z plane). Therefore, the position in the vehicle width position and the position in the upper-lower direction of the camera 100R, that is, the imaging lens 104R need to be set to prevent the view angle outer edge 106R corresponding to the imaging lens 104R from interfering with a portion (hereinafter, referred to as "outermost portion") of the front cowl 30 positioned on an outermost side in the vehicle width direction in front of the imaging lens 104R where the position in the longitudinal direction is defined.

A view angle outer edge 106R' indicated by a virtual line in FIG. 1 has a shape corresponding to a longitudinal section of the view angle outer edge 106R' taken on a plane parallel to the y-z plane corresponding to the position of a line LF illustrated in FIG. 2 for a camera 100R' where the position in the longitudinal direction is defined to be arranged at a required position, for example, in front of the upper half of the body of a seated driver, and the view angle outer edge 106R' has a state of being in contact with an outermost portion PR of the front cowl 30. Therefore, when the camera 100R' is arranged to be displaced leftward relative to this state while the position in the longitudinal direction and the position in the upper-lower direction of the camera 100R' are maintained, the view angle outer edge 106R' butts the outermost portion PR of the front cowl 30 and a situation where a part of the imaging range of the camera 100R' is obstructed occurs. That is, to set the position in the vehicle width direction and the position in the upper-lower direction of the imaging lens 104R to avoid a situation where the view angle outer edge 106R interferes with the outermost portion PR of the front cowl 30 and a part of the imaging range of the camera 100R is obstructed, it suffices that the position corresponding to the view angle outer edge 106R' indicated by the virtual line in FIG. 1 is assumed as the limit of the position of the imaging lens 104R on the side of the front cowl 30 and that the position of the imaging lens 104R, that is, the camera 100R is set to have this limit position or a position on the right side of this limit position. The camera 100R and the view angle outer edge 106R indicated by solid lines in FIG. 1 are illustrated in a manner of being displaced rightward relative to the camera 100R' and the view angle outer edge 106R' indicated by virtual lines so that the view angle outer edge 106R is a predetermined distance rightward away from the front cowl 30, and typically correspond to positions where the view angle outer edge 106R does not butt the outermost portion PR of the front cowl 30 even when various tolerances and the like in the saddle-ridden vehicle 1 are considered.

The camera 100R may be arranged to be displaced in the upper-lower direction. For example, in a case where the camera 100R is displaced in the lower direction, a view angle outer edge 106R‴ indicated by a virtual line in FIG. 1 has a shape corresponding to a longitudinal section of the view angle outer edge 106R‴ taken on a plane parallel to the y-z plane corresponding to the position of the line LF illustrated in FIG. 2 for a camera 100R‴ where the position in the longitudinal direction is defined, for example, to be located in front of the upper half of the body of a seated driver, and the view angle outer edge 106R‴ has a state of being in contact with an outermost portion PR' of the front cowl 30. That is, the position of a camera 100R‴ corresponding to this view angle outer edge 106R‴ is the limit of the position on the side of the front cowl 30. A camera 100R" and a view angle outer edge 106R" are illustrated in a manner of being displaced rightward relative to the camera 100R‴ and the view angle outer edge 106R‴ so that the view angle outer edge 106R" is a predetermined distance rightward away from the front cowl 30, and correspond to positions where the view angle outer edge 106R" does not butt the outermost portion PR' of the front cowl 30 even when various tolerances and the like in the saddle-ridden vehicle 1 are considered. Substantially the same arrangement structure holds also in a case where the camera 100R is displaced in the upper direction.

The positions of the cameras 100R, 100R', 100R", and 100R‴, the positions of the view angle outer edges 106R, 106R', 106R", and 106R‴, and the positions of the outermost portions PR and PR' of the front cowl 30 illustrated concerning the right camera 100R have a bilaterally symmetrical relation to the left camera 100L and correspond to positions of cameras 100L, 100L', 100L", and 100L‴, positions of view angle outer edges 106L, 106L', 106L", and 106L‴, and positions of outermost portions PL and PL' of the front cowl 30.

Therefore, in the above principle arrangement conditions, the mountability of the stereo cameras 100R and 100L to the saddle-ridden vehicle 1 can be enhanced without adding substantial changes to the existing configuration of the saddle-ridden vehicle 1, and the surrounding environment can be imaged in an appropriate imaging range where there is no obstruction by the vehicle body such as the front cowl 30.

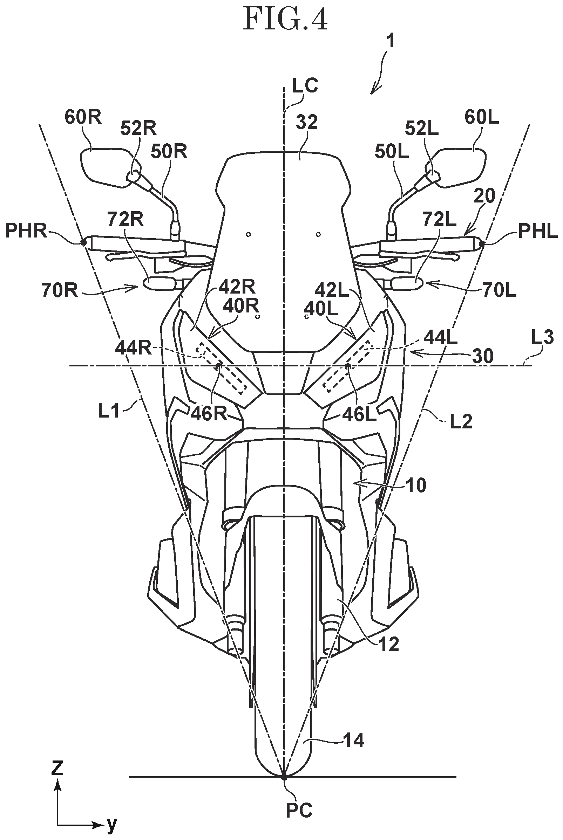

Regarding the above camera arrangement structure, additional arrangement conditions can be set to the principle arrangement conditions. Therefore, these additional arrangement conditions are explained below in detail with reference also to FIG 4.

FIG. 4 is a diagram for conceptually explaining the camera arrangement structure of the present embodiment and is a front view illustrating the front face of a saddle-ridden vehicle to which the camera arrangement structure is applied.

First, a line LC passing a ground contact center PC of the front wheel 14 to extend in the upper-lower direction, a line L1 passing the ground contact center PC and a handle right end PHR, and a line L2 passing the ground contact center PC and a handle left end PHL are defined as illustrated in FIG. 4. As a first additional arrangement condition set in addition to the principle arrangement conditions, it is preferable that the right camera 100R is arranged in a region enclosed by the line LC and the line L1 in a view from the front and that the left camera 100L is arranged in a region enclosed by the line LC and the line L2 in the view from the front with the objective of suppressing undesired influences exerted on the cameras 100R and 100L at the time of falling of the saddle-ridden vehicle 1. Typically, constituent elements of the saddle-ridden vehicle 1 are bilaterally symmetrical across a plane parallel to the x-z plane including the line LC.

Accordingly, in the first additional arrangement condition described above in addition to the principle arrangement conditions, it is possible to suppress undesired influences on the stereo cameras 100R and 100L at the time of falling of the saddle-ridden vehicle 1.

Next, a line L3 in contact with upper parts of the headlight units 40R and 40L, more specifically, the uppermost portion of an optical axis 46R and the uppermost portion of an optical axis 46L of the light 44R and the light 44L and extending in the vehicle width direction is defined as illustrated in FIG. 4. As a second additional arrangement condition set in addition to the principle arrangement conditions, or the principle arrangement conditions and the first additional arrangement condition, it is preferable that the cameras 100R and 100L are arranged in a region above the line L3 in the view from the front with the objective ofimproving the imaging performance including a night stereoscopic view of the cameras 100R and 100L. Since the optical axis 46R and the optical axis 46L are set in a downward direction to light the roads both in the case of low beam and the case of high beam in practical use, portions corresponding to the uppermost portion of the optical axis 46R and the uppermost portion of the optical axis 46L can be considered as portions corresponding to light emission centers of the light 44R and the light 44L. In a case where each of the light 44R and the light 44L is constituted of a plurality of light-emitting elements, a linear light-emitting element, or the like and it is difficult to define each light emission center, the light emission center of an uppermost light-emitting part of the light 44R and the light emission center of an uppermost light-emitting part of the light 44L may be caused to correspond to the uppermost portion of the optical axis 46R and the uppermost portion of the optical axis 46L.

Accordingly, in the second additional arrangement condition described above, the imaging performance for the surrounding environment including a night stereoscopic view of the stereo cameras 100R and 100L can be further improved in addition to that in the principle arrangement conditions, or that in the principle arrangement conditions and that in the first additional arrangement condition.

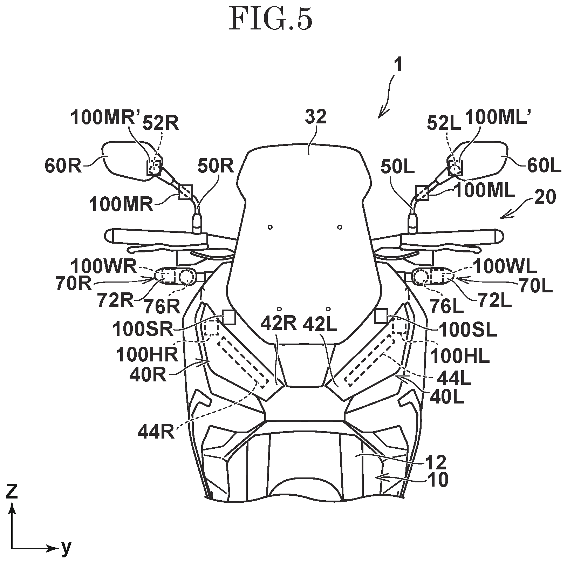

[Specific examples of camera arrangement structure] Specific examples of the camera arrangement structure of the present embodiment are explained next in detail with further reference to FIGS. 5 to 7. These specific examples are examples in which the principle arrangement conditions, the first additional arrangement condition, and the second additional arrangement condition described above can be all satisfied. However, the specific examples are not limited thereto and an example in which the principle arrangement conditions, the principle arrangement conditions and the first additional arrangement condition, or the principle arrangement conditions and the second addition arrangement condition are satisfied may also hold.

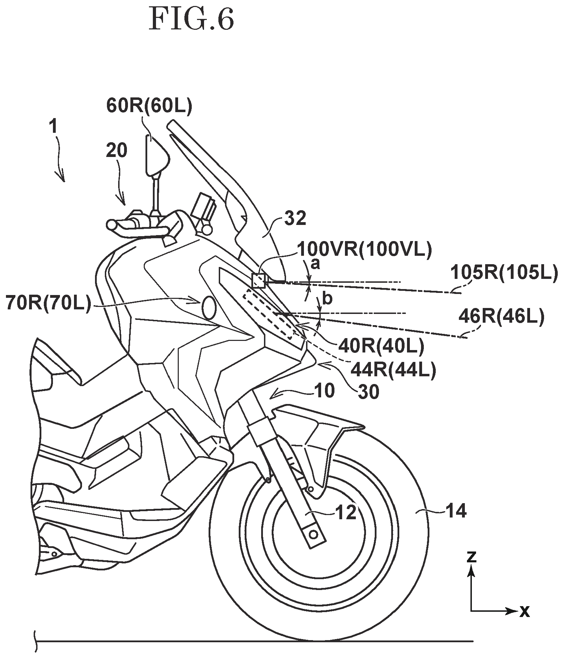

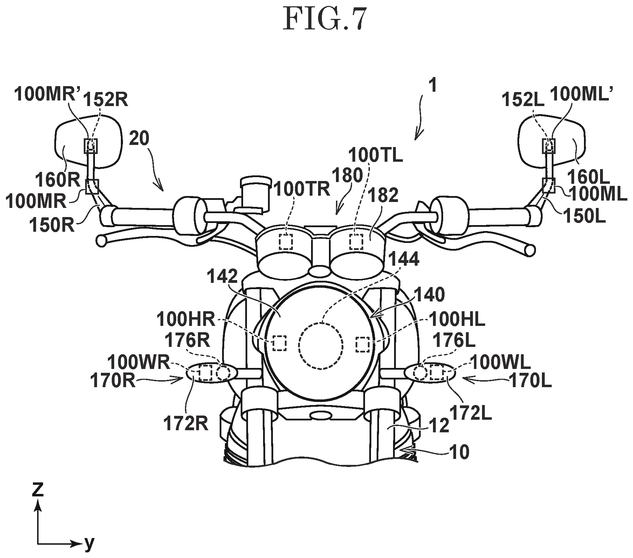

FIG. 5 is a partial front view partially illustrating the front face of a saddle-ridden vehicle to which the camera arrangement structure of the present embodiment is applied. FIG. 6 is a partial side view partially illustrating a right side face of the saddle-ridden vehicle to which the camera arrangement structure of the present embodiment is applied. FIG. 7 is a partial front view partially illustrating a front face of a saddle-ridden vehicle of another example to which the camera arrangement structure of the present embodiment is applied.

### (First specific example)

First, as a first specific example, the right camera 100R (denoted by 100MR for explanatory convenience) is attached to the mirror stay 50R of the mirror 60R to be positioned on the upper side relative to one third of the upper-lower length of the mirror stay 50R as illustrated in FIG. 5. With this configuration, obstruction of the imaging range of the camera 100MR by knuckle guards or the like that are sometimes additionally attached in front of the handle 20 can be avoided. The right camera 100R (denoted by 100MR' for explanatory convenience) may be attached to the attachment part 52R that supports the mirror 60R on the mirror stay 50R. The manner of such attachment may be an external one where the enclosure of the camera 100MR' is fixed to the attachment part 52R by screwing or the like, or an internal one where the camera 100MR' is downsized and a part of the enclosure is housed inside the attachment part 52R.

With this configuration, occurrence of a situation where the position of the stereo camera 100MR' is undesirably moved at the time of adjustment of the position of the mirror 60R can be avoided. Furthermore, typically, the first additional condition and the second additional condition are also satisfied in this configuration. Therefore, it is possible to more reliably suppress undesired influences on the stereo cameras 100MR and 100MR' at the time of falling and to further improve the imaging performance of the surrounding environment including a night stereoscopic view of the stereo cameras 100MR and 100MR'. The left camera 100L (denoted by 100ML or 100ML' for explanatory convenience) is attached to the mirror stay 50L or the attachment part 52L that supports the mirror 60L to the mirror stay 50L so as to correspond to the right camera 100MR or 100MR' and to be bilaterally symmetrical thereto. Therefore, the effects thereof are the same as those of the right cameras 100MR and 100MR'.

### (Second specific example)

Next, as a second specific example, the right camera 100R (denoted by 100SR for explanatory convenience) is in a state of being arranged in front of the windscreen 32 not to overlap the windscreen 32 in a view from the front and arranged above the headlight unit 40R and, typically, the enclosure of the camera 100SR is attached to the front cowl 30 as illustrated in FIG. 5. The left camera 100L (denoted by 100SL for explanatory convenience) is in a state of being arranged in front of the windscreen 32 not to overlap the windscreen 32 in the view from the front and arranged above the headlight unit 40L so as to be bilaterally symmetrical to the right camera 100SR and, typically, the enclosure of the camera 100SL is attached to the front cowl 30. With this configuration, imaging performed behind the windscreen 32 by the stereo cameras 100SR and 100SL can be avoided and undesired influences exerted by the windscreen 32 can be eliminated at the time of imaging by the stereo cameras 100SR and 100SL. Furthermore, typically, the first additional condition and the second additional condition are also satisfied in this configuration.

### (Third specific example)

Next, as a third specific example, the right camera 100R (denoted by 100HR for explanatory convenience) is in a state of being arranged behind the cover 42R and on a right end part of the headlight unit 40R not to overlap the light 44R in the enclosure of the headlight unit 40R and, typically, the enclosure of the camera 100HR is attached to the enclosure of the headlight unit 40R as illustrated in FIG. 5. The left camera 100L (denoted by 100HL for explanatory convenience) is in a state of being arranged behind the cover 42L and on a left end part of the headlight unit 40L not to overlap the light 44L in the enclosure of the headlight unit 40L so as to be bilaterally symmetrical to the right camera 100HR and, typically, the enclosure of the camera 100HL is attached to the enclosure of the headlight unit 40L. With this configuration, it is possible to suppress undesired influences of irradiation light of the headlight units 40R and 40L at the time of imaging by the stereo cameras 100HR and 100HL and to realize a versatile arrangement structure that is achieved regardless of vehicle types because the headlight units 40R and 40L are indispensable attached components for the saddle-ridden vehicle 1. Furthermore, typically, the first additional condition and the second additional condition are also satisfied in this configuration.

### (Fourth specific example)

Next, as a fourth specific example, the right camera 100R (denoted by 100WR for explanatory convenience) is in a state of being arranged behind the cover 72R not to overlap the light 76R in the enclosure 74R of the turn signal unit 70R and, typically, the enclosure of the camera 100WR is attached to the enclosure 74R of the turn signal unit 70R as illustrated in FIG. 5. The left camera 100L (denoted by 100WL for explanatory convenience) is in a state of being arranged behind the cover 72L not to overlap the light 76L in the enclosure 74L of the turn signal unit 70L so as to be bilaterally symmetrical to the right camera 100WR and, typically, the enclosure of the camera 100WL is attached to the enclosure 74L of the turn signal unit 70L. With this configuration, the stereo cameras 100WR and 100WL can image the surrounding environment in a state where there are substantially no objects that obstruct the front and a versatile arrangement structure that is achieved regardless of vehicle types can be realized because the turn signal units 70R and 70L are indispensable attached components for the saddle-ridden vehicle 1. Furthermore, typically, the first additional condition and the second additional condition are also satisfied in this configuration. When light emission of the lights 76R and 76L needs to be avoided, the surrounding environment may be imaged using incident light entering the cameras 100WR and 100WL at a time when these lights 76R and 74L do not emit light.

### (Fifth specific example)

Next, as a fifth specific example, the right camera 100R (denoted by 100VR for explanatory convenience) is in a state where the optical axis 105R of the imaging lens does not intersect with the optical axis 46R of the headlight unit 40R and, typically, the enclosure of the camera 100VR is attached to the front cowl 30 as illustrated in FIG. 6. The state where the optical axis 105R of the imaging lens does not intersect with the optical axis 46R of the headlight unit 40R typically means a state where an angle a formed by a direction parallel to the x-axis and the optical axis 105R of the imaging lens is smaller than an angle b formed by the direction parallel to the x-axis and the optical axis 46R of the headlight unit 40R to position the optical axis 105R of the imaging lens on the upper side of the optical axis 46R of the headlight unit 40R extending downward toward the front. It can be considered that the optical axis 46R of the headlight unit 40R typically corresponds to an optical axis from the light emission center of the light 44R. However, in a case where the light 44R is constituted of a plurality of light-emitting elements, a linear light-emitting element, or the like, the optical axis 46R may be considered to correspond to the optical axis of the uppermost light-emitting part thereof. The left camera 100L (denoted by 100VL for explanatory convenience) is in a state where the optical axis 105L of the imaging lens does not intersect with the optical axis 46L of the headlight unit 40L so as to be bilaterally symmetrical to the right camera 100VR and, typically, the enclosure of the camera 100VL is attached to the front cowl 30. With this configuration, it is possible to suppress undesired influences of irradiation light of the headlight units 40R and 40L at the time of imaging by the stereo cameras 100VR and 100VL. Furthermore, typically, the first additional condition and the second additional condition are also satisfied in this configuration.

### (Sixth specific example)

Next, as a sixth specific example, the saddle-ridden vehicle 1 of the modern classical type is explained as an example as illustrated in FIG. 7. The saddle-ridden vehicle 1 of the modern classical type is a vehicle of the naked type or the classical type having a more sophisticated technology and a more recreational feel and does not include a cowl or a windscreen. However, there are structural objects such as the steering and front suspension mechanism 10 that may be considered to correspond to a part of the vehicle body. For example, an instrument cluster 180 is exposed toward the front. In this specific example, the right camera 100R (denoted by 100TR for explanatory convenience) is in a state of being arranged in an enclosure 182 of the instrument cluster 180 on the right side and, typically, the enclosure of the camera 100TR is attached to the enclosure 182 of the instrument cluster 180. A front part of the enclosure 182 of the instrument cluster 180 is constituted of a translucent member to transmit reflected light mainly from the surrounding environment in front of the saddle-ridden vehicle 1. The left camera 100L (denoted by 100TL for explanatory convenience) is in a state of being arranged in the enclosure 182 of the instrument cluster 180 on the left side so as to be bilaterally symmetrical to the right camera 100TR and, typically, the enclosure of the camera 100TL is attached to the enclosure 182 of the instrument cluster 180. With this configuration, the stereo cameras 100TR and 100TL can be mounted without undesired influences on the exterior appearance of the saddle-ridden vehicle 1 of the modern classical type. Furthermore, typically, the first additional condition and the second additional condition are also satisfied in this configuration.

### (Seventh specific example)

Next, as a seventh specific example, there is a case in which bar end mirrors where a right mirror stay 150R is attached to a right end part of the handle 20 and a left mirror stay 150L is attached to a left end part of the handle 20 are included in the saddle-ridden vehicle 1 of the modern classical type as illustrated in FIG. 7. Therefore, a configuration including bar end mirrors is explained as an example. The right camera 100R (denoted by 100MR for explanatory convenience) is attached to the mirror stay 150R of a mirror 160R to be positioned on the upper side relative to one third of the upper-lower length of the mirror stay 150R. With this configuration, obstruction of the imaging range of the camera 100MR by knuckle guards or the like that are sometimes additionally attached in front of the handle 20 can be avoided. The right camera 100R (denoted by 100MR' for explanatory convenience) may be attached to an attachment part 152R that supports the mirror 160R on the mirror stay 150R. The manner of such attachment may be an external one where the enclosure of the camera 100MR' is fixed to the attachment part 152R by screwing or the like, or an internal one where the camera 100MR' is downsized and a part of the enclosure is housed inside the attachment part 152R. With this configuration, occurrence of a situation where the position of the stereo camera 100MR' is undesirably moved at the time of adjustment of the positions of the mirror 160R can be avoided. Furthermore, typically, the first additional condition and the second additional condition are also satisfied in this configuration. The left camera 100L(denoted by 100ML or 100ML' for explanatory convenience) is attached to the mirror stay 150L or an attachment part 152L that supports the mirror 160L on the mirror stay 150L so as to correspond to the right camera 100MR or 100MR' and to be bilaterally symmetrical thereto. Therefore, the effects thereof are the same as those of the right cameras 100MR and 100MR'.

### (Eighth specific example)

Next, as an eighth specific example, there is a case where a single headlight unit 140 is included in the saddle-ridden vehicle 1 of the modern classical type as illustrated in FIG. 7. Therefore, a configuration including the single headlight unit 140 is explained as an example. The right camera 100R (denoted by 100HR for explanatory convenience) is in a state of being arranged behind a cover 142 and on a right end part of the headlight unit 140 not to overlap a light 144 in the enclosure of the headlight unit 140 and, typically, the enclosure of the camera 100HR is attached to the enclosure of the headlight unit 140. The left camera 100L (denoted by 100HL for explanatory convenience) is in a state of being arranged behind the cover 142 and on a left end part of the headlight unit 140 not to overlap the light 144 in the enclosure of the headlight unit 140 so as to be bilaterally symmetrical to the right camera 100HR and, typically, the enclosure of the camera 100HL is attached to the enclosure of the headlight unit 140. With this configuration, undesired influences of irradiation light of the headlight unit 140 at the time of imaging by the stereo cameras 100HR and 100HL can be suppressed, and a versatile arrangement structure that is achieved regardless of vehicle types can be realized because the headlight unit 140 is an indispensable attached component for the saddle-ridden vehicle 1. Furthermore, typically, the first additional condition and the second additional condition are also satisfied in this configuration.

### (Ninth specific example)

Next, as a ninth specific example, there is a case where turn signal units 170R and 170L are attached to the saddle-ridden vehicle 1 of the modern classical type to be protruded outward in the vehicle width direction from a frame member of the saddle-ridden vehicle 1 or a bracket of the frame as illustrated in FIG. 7. Therefore, a configuration including such turn signal units 170R and 170L is explained as an example. The right camera 100R (denoted by 100WR for explanatory convenience) is in a state of being arranged behind a cover 172R not to overlap a light 176R in the enclosure of the turn signal unit 170R and, typically, the enclosure of the camera 100WR is attached to the enclosure of the turn signal unit 170R. The left camera 100L (denoted by 100WL for explanatory convenience) is in a state of being arranged behind a cover 172L not to overlap a light 176L in the enclosure of the turn signal unit 170L so as to be bilaterally symmetrical to the right camera 100WR and, typically, the enclosure of the camera 100WL is attached to the enclosure of the turn signal unit 170L. With this configuration, the stereo cameras 100WR and 100WL can image the surrounding environment in a state where there are substantially no objects that obstruct the front and a versatile arrangement structure that is achieved regardless of the vehicle type can be realized because the turn signal units 170R and 170L are indispensable attached components for the saddle-ridden vehicle 1. Furthermore, typically, the first additional condition and the second additional condition are also satisfied in this configuration.

In the present invention, the types, shapes, arrangements, numbers, and the like of constituent elements are not limited to those described in the above embodiment, and it is needless to mention that changes can be appropriately made without departing from the scope of the invention, such as appropriately replacing these constituent elements with other members having equivalent operational effects.

### INDUSTRIAL APPLICABILITY

As described above, according to the present invention, it is possible to provide a camera arrangement structure for a saddle-ridden vehicle that can enhance the mountability of a camera on a saddle-ridden vehicle and that can image the surrounding environment in an appropriate imaging range that is not obstructed by a vehicle body. Therefore, because of its general purposes and universal characteristics, applications of the present invention can be expected in a wide range in an optical unit arrangement structure for a saddle-ridden vehicle.

### REFERENCE SIGNS LIST

1 saddle-ridden vehicle
10 steering and front suspension mechanism
12 telescopic front fork
14 front wheel
20 handle
30 front cowl
32 windscreen
40R, 40L headlight unit
42R, 42L cover
44R, 44L light
46R, 46L optical axis
140 headlight unit
142 cover
144 light
50R, 50L mirror stay
52R, 52L attachment part
60R, 60L mirror
70R, 70L turn signal unit
72R, 72L cover
74R, 74L enclosure
76R, 76L light
100R, 100L camera
102R, 102L enclosure
104R, 104L imaging lens
105R, 105L optical axis
106R, 106L outer edge (view angle outer edge)
108R, 108L imaging element
140 headlight unit
142 cover
144 light
150R, 150L mirror stay
152R, 152L attachment part
160R, 160L mirror
170R, 170L turn signal unit
172R, 172L cover
176R, 176L light
180 instrument cluster
182 enclosure
AR, AL angle of view
PFR, PFL front principal point
PR, PR', PL, PL' outermost portion

## Claims

1. A camera arrangement structure for a saddle-ridden vehicle that includes a stereo camera imaging a surrounding environment, and for which a forward-backward direction, a vehicle width direction, and an upper-lower direction are defined, wherein
the stereo camera includes a first camera, and a second camera that is a separate member from the first camera and that is opposed to the first camera in the vehicle width direction,
the first camera has a first angle of view and a first imaging lens, and a position of the first imaging lens in the vehicle width direction and a position thereof in the upper-lower direction are defined to prevent an outer edge of the first angle of view corresponding to a position of the first imaging lens in the forward-backward direction from interfering with a portion positioned on an outer side in a vehicle body of the saddle-ridden vehicle in a forward direction of the first imaging lens in the forward-backward direction, and
the second camera has a second angle of view and a second imaging lens, and a position of the second imaging lens in the vehicle width direction and a position thereof in the upper-lower direction are defined to prevent an outer edge of the second angle of view corresponding to a position of the second imaging lens in the forward-backward direction from interfering with a portion positioned on an outer side in the vehicle body of the saddle-ridden vehicle in a forward direction of the second imaging lens in the forward-backward direction.

2. The camera arrangement structure for a saddle-ridden vehicle according to claim 1, wherein
the first camera is arranged in a region enclosed by a first line passing a first end of a handle of the saddle-ridden vehicle in the vehicle width direction and a ground contact center of a front wheel of the saddle-ridden vehicle, and an upper-lower center line passing the ground contact center to extend in parallel to the upper-lower direction of the saddle-ridden vehicle in a view from front of the saddle-ridden vehicle, and
the second camera is arranged in a region enclosed by a second line passing a second end opposed to the first end of the handle in the vehicle width direction and the ground contact center, and the upper-lower center line in the view from front.

3. The camera arrangement structure for a saddle-ridden vehicle according to claim 1 or 2, wherein the first camera and the second camera are arranged to be positioned on an upper side in the upper-lower direction of the saddle-ridden vehicle relative to an optical axis of a headlight of the saddle-ridden vehicle in a view from front of the saddle-ridden vehicle.

4. The camera arrangement structure for a saddle-ridden vehicle according to claim 1 or 2, wherein
the saddle-ridden vehicle includes a first mirror and a second mirror opposed to each other in the vehicle width direction, and
the first camera is attached to an attachment stay for the first mirror on an upper side relative to one third of a length of the attachment stay for the first mirror in the upper-lower direction of the saddle-ridden vehicle, and the second camera is attached to an attachment stay for the second mirror on an upper side relative to one third of a length of the attachment stay for the second mirror in the upper-lower direction.

5. The camera arrangement structure for a saddle-ridden vehicle according to claim 4, wherein the first camera is attached to a mirror attachment part of the attachment stay for the first mirror, and the second camera is attached to a mirror attachment part of the attachment stay for the second mirror.

6. The camera arrangement structure for a saddle-ridden vehicle according to claim 1 or 2, wherein the first camera and the second camera are arranged not to overlap a windscreen of the saddle-ridden vehicle and to be positioned in front of the windscreen in the forward-backward direction of the saddle-ridden vehicle and above a headlight of the saddle-ridden vehicle in the upper-lower direction of the saddle-ridden vehicle in a view from front of the saddle-ridden vehicle.

7. The camera arrangement structure for a saddle-ridden vehicle according to claim 1 or 2, wherein the first camera and the second camera include a first imaging lens and a second imaging lens respectively corresponding thereto, and a first optical axis of the first imaging lens and a second optical axis of the second imaging lens are set not to intersect with an optical axis of a headlight of the saddle-ridden vehicle.

8. The camera arrangement structure for a saddle-ridden vehicle according to claim 1 or 2, wherein the first camera and the second camera are arranged in an instrument cluster of the saddle-ridden vehicle.

9. The camera arrangement structure for a saddle-ridden vehicle according to claim 4, wherein
the first mirror is a first bar end mirror and the second mirror is a second bar end mirror, and
the first camera is attached to a mirror attachment part of an attachment stay for the first bar end mirror, and the second camera is attached to a mirror attachment part of an attachment stay for the second bar end mirror.

10. The camera arrangement structure for a saddle-ridden vehicle according to claim 1 or 2, wherein
the first camera is arranged in a first end region in the vehicle width direction inside a headlight of the saddle-ridden vehicle, and
the second camera is arranged in a second end region opposed to the first end region in the vehicle width direction inside the headlight.

11. The camera arrangement structure for a saddle-ridden vehicle according to claim 1 or 2, wherein
the saddle-ridden vehicle includes a first turn signal and a second turn signal opposed to each other in the vehicle width direction,
the first camera is arranged in the first turn signal,
and
the second camera is arranged, in the other side, of the second turn signal.
